# EUROPÄISCHE PATENTSCHRIFT

(11) **EP 2 889 161 B1**
(45) Veröffentlichungstag und Bekanntmachung des Hinweises auf die Patenterteilung: **03.04.2019**
(21) Anmeldenummer: 14191526.4
(22) Anmeldetag: 03.11.2014
(51) Int. Cl.: B60C 15/00, B60C 15/06, B60C 13/04, B60C 13/00

(54) **Fahrzeugluftreifen**
Pneumatic tyres for a vehicle
Pneumatiques de véhicule

(30) Priorität: 06.12.2013 DE 102013225157
(43) Veröffentlichungstag der Anmeldung: 01.07.2015
(73) Patentinhaber: Continental Reifen Deutschland GmbH, 30165 Hannover (DE)
(72) Erfinder: Krishnamurthy, Kumar, 30173 Hannover (DE); Binder, Axel, 30161 Hannover (DE)
(74) Vertreter: Finger, Karsten

(56) Entgegenhaltungen:
- EP-A2- 1 759 892
- DE-A1-102006 025 794
- US-A- 4 085 787
- US-A1- 2007 044 889

## Beschreibung

Die Erfindung betrifft einen Fahrzeugluftreifen mit Gürtellagen, mit zwei Seitenwänden, mit zwei Wulstbereichen mit wenigstens je einem Wulstkern, mit einer Karkasse, welche den Reifen von Wulstbereich zu Wulstbereich durchläuft, die Wulstbereiche von axial innen nach axial außen umschlingt und als Karkasshochschlag auf einer Höhe D endet, wobei D radial außen in Bezug auf den Wulstbereich angeordnet ist, mit einer Festigkeitsträger aufweisenden zusätzlichen Verstärkungslage, welche axial außen auf der Karkasse und derart in der Seitenwand angeordnet ist, dass deren radial inneres Ende (unteres Ende) auf Höhe des Wulstbereich liegt und mit einer Gummilage, welche zwischen der Karkasse und der zusätzlichen Verstärkungslage angeordnet ist, wobei diese Gummilage sich jedoch an ihrem unteren, dem Wulstbereich zugewandten Ende - im Reifenquerschnitt betrachtet - ab einer Höhe B dreieckförmig verjüngt und in einer Spitze endet und wobei auf Höhe B die Dicke der Gummilage größer als die Dicke des axial außen angeordneten Karkasshochschlages ist, wobei B auf Höhe des radial äußeren Endes (oberen Endes) des Wulstbereiches liegt und wobei dieses untere Ende der Gummilage axial innen in Bezug auf den Wulstbereich angeordnet ist.

Ein derartiger Fahrzeugluftreifen ist aus der US 2007/044889 A1 bekannt.

Aus der US 4085787 A ist ein Fahrzeugluftreifen mit einer Karkasse mit Karkasshochschlag bekannt, bei welchen eine Verstärkungslage derart im Wulstbereich angeordnet ist, dass diese den Hochschlag und das Hochschlagende bedeckt und sich in die Seitenwand hineinerstreckt. Aus der DE 10 2006 025794 A1 und der ist jeweils ein Fahrzeugluftreifen mit Notlaufeigenschaften aufgrund verstärkter Reifenseitenwände bekannt. Für einen verbesserten Fahrkomfort bei langer Fahrstrecke im Notlauf wird in der DE 10 2006 025794 A1 vorgeschlagen, die Karkasse einlagig auszuführen und zusätzlich einen Wulstverstärker mit radial verlaufenden Festigkeitsträgern axial innerhalb des Kernprofils anzuordnen. Der Wulstbereich des Fahrzeugluftreifens der EP 1 759 892 A2 ist durch einen Kern und einem wenigstens zwei Kernprofile aufweisendes Kernprofil verstärkt.

In der bisher unveröffentlichten DE 10 2003 109 582 A ist beschrieben, zum Schutz vor Scheuerkontakten zwischen den Festigkeitsträgern der Karkasslage und denen der zusätzlichen Verstärkungslage ist eine Gummilage anzuordnen. Hierdurch liegen beide Festigkeitsträger enthaltende Lagen nicht mehr unmittelbar aufeinander auf und es können nicht die Festigkeitsträger beider vorgenannter Lagen in unmittelbaren Kontakt kommen. Der untere Bereich der zusätzlichen Festigkeitsträgerlage ist zwischen Karkasslage und Wulstbereich angeordnet und endet vorzugsweise entweder auf Höhe des Apex, wobei das Ende zwischen Karkasslage und Apex liegt, oder endet axial innen oder axial außen in Bezug auf den Wulstkern oder unterhalb des Wulstkernes. Die Haltbarkeit des Fahrzeugluftreifens ist verbessert. Mit "Karkasslage" ist in der DE 10 2003 109 582 A in Bezug auf die Anordnung der zusätzlichen Verstärkungslage nicht der Karkasshochschlag gemeint.

Es hat sich jedoch gezeigt, dass weiterhin Verbesserungsbedarf hinsichtlich der Haltbarkeit des Fahrzeugluftreifens besteht.

Es ist daher die Aufgabe der vorliegenden Erfindung, einen Fahrzeugluftreifen bereitzustellen, der in Bezug auf seine Haltbarkeit weiter verbessert ist.

Die Aufgabe wird gelöst, indem diese Gummilage über ihre radiale Erstreckung eine gleiche Dicke aufweist, indem das radial äußere Ende (oberes Ende) der zusätzlichen Verstärkungslage unterhalb einer Gürtellage liegt und indem die zusätzliche Verstärkungslage auf einer Höhe A beginnt, welche zwischen den Höhen E und B liegt, wobei E auf Höhe des radial inneren Endes (unteren Endes) des Wulstkernes angeordnet ist.

Erfindungswesentlich ist, dass ein harmonischer Übergang zwischen den unterschiedlichen Lagen im Bereich des Wulstes geschaffen ist. Durch die sich an ihrem unteren Ende dreieckförmig verjüngende Gummilage sind Knicke der Karkasslage im Bereich des Wulstes vermieden und es treten keine Kraftspitzen im Wulstbereich auf. Zudem ist durch die Anordnung der Gummilage die Scherbelastung zwischen den Festigkeitsträger aufweisenden Lagen Karkasslage und Wulstverstärker verringert. Es ist zudem eine 2a

Staffelung der unterschiedlichen Lagenenden bewirkt. Die Haltbarkeit des Fahrzeugreifens ist verbessert.

"Wulstbereich" meint Wulstkern sowie Apex (Kernreiter), soweit dieser letztgenannte angeordnet ist.

"Höhe" meint die Höhe/ Erstreckung in radialer Richtung.

Vorteilhaft ist es, wenn jeder Wulstbereich nur aus einem Wulstkern besteht, wobei der Wulstkern vorzugsweise ein Hochkantkern ist. Es ist auf einen Apex verzichtet. Hochkantkerne haben einen Querschnitt, der höher als breit ist. Dementsprechend erstreckt sich der Kern den Wulstbereich hinauf. Hierdurch wird eine für die Reifenperformance vorteilhafte stärkere Kopplung zwischen Karkasse und Wulstverstärker erreicht. Diese stärkere Kopplung bewirkt jedoch auch eine stärkere Belastung im Wulstbereich zwischen Karkasse und Wulstverstärker. Diese stärkere Belastung, insbesondere Scherbelastung, ist durch die zusätzliche Gummilage verringert.

In einer anderen Ausführung der Erfindung besteht der Wulstbereich aus Wulstkern und Apex. Ein Wulstkern, auf dem ein Apex angeordnet ist, weist einen etwa quadratischen Querschnitt auf. Ein quadratischer Wulstkern ist insbesondere für einen sicheren Felgensitz von Vorteil.

Vorteilhaft ist es, wenn die Gummilage auf der Höhe A eine Dicke von 0 - 2 mm aufweist. Hierdurch erfolgt ein langsamer Materialaufbau der zusätzlichen Gummilage, wodurch einerseits die Karkasslage nicht geknickt angeordnet ist und wodurch andererseits nicht zu viel zusätzliches Material im Wulstbereich angeordnet ist, wodurch andernfalls unvorteilhaft viel Wärme gebildet wäre. Die Haltbarkeit des Reifens ist verbessert.

Zweckmäßig ist es, wenn die Gummilage auf der Höhe B eine Dicke von 0,5 - 3 mm, vorzugsweise eine Dicke von etwa 0,9 mm aufweist. Die Gummilage radial oberhalb des Wulstbereiches puffert die Koppelung zwischen dem Wulstverstärker mit der Karkasse. Die vorgenannte gleichbleibende Dicke hat sich als besonders positiv für die verbesserte Haltbarkeit herausgestellt.

Vorteilhaft ist es, wenn die Festigkeitsträger der Karkasse einen Winkel zwischen 78° und 90° mit der Reifenumfangsrichtung einschließen, wobei vorzugsweise die Festigkeitsträger des Wulstverstärkers einen Winkel zwischen 30° und 70°, vorzugsweise von etwa 55°, mit der Umfangsrichtung einschließen. Durch diese Winkelkonstellation ist die erwünschte Kopplung zwischen Karkasse und Wulstverstärkter am effektivsten.

In bestimmten Ausführungen der Erfindung weist die Karkasse eine C-Lagenkonstruktion oder eine 1+0-Lagenkonstruktion auf. Bei einer 1+0-Lagenkonstruktion liegt das Karkasshochschlagende immer höher als das obere Apexende, wobei das Karkasshochschlagende mindestens 5mm höher als das obere Apexende endet.

Vorteilhaft ist es, wenn die zusätzliche Verstärkungslage 1 - 40 mm, vorzugsweise etwa 25 mm weit unter den Gürtel reicht und dort endet, gemessen parallel zur Gürtelkontur und von der Gürtelkante der breitesten Gürtellage zur Gürtelmitte hin. Hierdurch ist das durch den Reifen im Fahrbetrieb gebildete Außengeräusch verringert. Denn es hat sich gezeigt, dass durch eine definierte Materialansammlung im Crown-Bereich des Reifens das Außengeräusch verbesserbar ist.

Der erfindungsgemäße Fahrzeugluftreifen ist vorzugsweise ein PKW-Niederquerschnittsreifen. Die Seitenwände von Niederquerschnittsreifen werden aufgrund ihrer geringen Seitenwandhöhe besonders stark auf Biegung beansprucht. Um Ausfälle durch Risse bzw. Beschädigungen in der Seitenwand der eingangs genannten Art zu vermeiden, ist zur Verstärkung der Seitenwand zusätzlich zur zusätzlichen Verstärkungslage eine Gummilage mit spitz zulaufendem unteren Ende zwischen Karkasslage und dieser zusätzlichen Verstärkungslage eingebracht.

Weitere Merkmale, Vorteile und Einzelheiten der Erfindung werden anhand der Zeichnung, die ein schematisches Ausführungsbeispiel darstellt, näher erläutert.

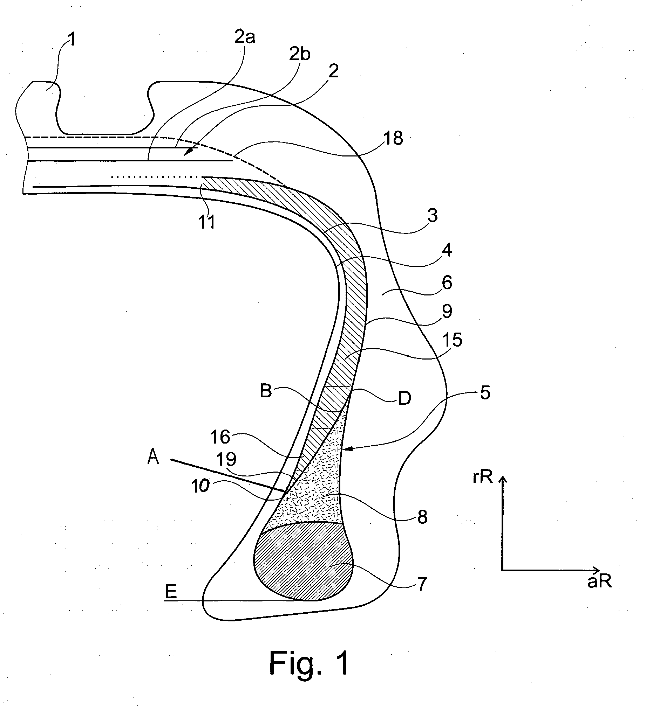

Die **Fig.1** zeigt einen Teil-Querschnitt durch einen Niederquerschnitts-Radialreifen für Personenkraftwagen, welcher einen profilierten Laufstreifen 1, einen aus zwei Gürtellagen 2a, 2b, bestehenden Gürtel 2, welcher durch eine Bandage 18 abgedeckt ist, eine Radialkarkasse 3, eine luftdicht ausgeführte Innenschicht 4, Seitenwände 6 sowie Wulstbereiche 5 aus Wulstkernen 7 und Apexen 8 aufweist. Die Lagen 2a, 2b des Gürtels 2 bestehen aus in eine Gummimischung eingebetteten Festigkeitsträgern aus Stahlcord, welche innerhalb jeder Lage parallel zueinander verlaufen, wobei die Stahlcorde der Lagen in kreuzender Anordnung zu den Stahlcorden der benachbarten Lage orientiert sind und mit der Reifenumfangsrichtung jeweils einen Winkel zwischen 24° und 46° einschließen.

Die Karkasslage 3 umschlingt die Wulstbereiche 5 von axial innen nach axial außen und endet jeweils als Karkasshochschlag 3a auf einer Höhe D, wobei D radial außen in Bezug auf den Wulstbereich (oberhalb des Wulstbereiches) angeordnet ist. Der Radialreifen weist eine zusätzliche mit Festigkeitsträgern verstärkte Festigkeitsträgerlage 9 auf, welche axial außen auf der Karkasse 3 derart in der Seitenwand angeordnet ist, dass deren unteres Ende 10 auf Höhe des Wulstbereich 5 und deren oberes Ende 11 unterhalb der 1. Gürtellage 2a liegt und axial außen vom Karkasshochschlag 3a begrenzt wird. Zwischen der Karkasse 3 und der zusätzlichen Verstärkungslage 9 ist eine Gummilage 15 angeordnet. Diese Gummilage 15 weist über ihre radiale Erstreckung eine gleiche Dicke auf, verjüngt sich jedoch an ihrem unteren, dem Wulstbereich zugewandten Ende 16 ab einer Höhe B dreieckförmig und endet in einer Spitze 19. Auf Höhe B ist die Dicke der Gummilage 15 größer als die Dicke des axial außen angeordneten Karkasshochschlages 3a, wobei B auf Höhe des oberen Endes des Wulstbereiches 5 liegt. Dieses untere Ende der Gummilage 16 ist axial innen in Bezug auf den Wulstbereich angeordnet. Die zusätzliche Verstärkungslage 9 beginnt auf einer Höhe A, welche zwischen den Höhen E und B liegt, wobei E auf Höhe des unteren Endes des Wulstkernes 7 angeordnet ist. Die Gummilage 15 weist auf der Höhe A eine Dicke von 0 - 2 mm auf, auf der Höhe B eine Dicke von 0,5 - 3 mm, vorzugsweise eine Dicke von etwa 0,9 mm.

A entspricht dem unteren Ende der zusätzlichen Festigkeitsträgerlage 10.

### Bezugszeichenliste (Teil der Beschreibung)

- 1: Laufstreifen
- 2: Gürtel
- 2a: 1. Gürtellage
- 2b: 2. Gürtellage
- 3: Karkasse
- 3a: Karkasshochschlag
- 4: Innenschicht
- 5: Wulstbereich
- 6: Seitenwand
- 7: Wulstkern
- 8: Apex
- 9: Zusätzliche Festigkeitsträgerlage
- 10: Radial inneres Ende (unteres Ende) der zusätzlichen Festigkeitsträgerlage
- 11: Radial äußeres Ende (oberes Ende) der zusätzlichen Festigkeitsträgerlage
- 15: Gummilage
- 16: Unteres Ende der Gummilage
- 18: Bandage
- 19: Spitze der Gummilage
- aR: axiale Richtung
- rR: radiale Richtung

## Patentansprüche

1. Fahrzeugluftreifen mit Gürtellagen (2a, 2b), mit zwei Seitenwänden (6), mit zwei Wulstbereichen (5) mit wenigstens je einem Wulstkern (7), mit einer Karkasse (3), welche den Reifen von Wulstbereich (5) zu Wulstbereich (5) durchläuft, die Wulstbereiche (5) von axial innen nach axial außen umschlingt und als Karkasshochschlag auf einer Höhe D endet, wobei D radial außen in Bezug auf den Wulstbereich angeordnet ist,
mit einer Festigkeitsträger aufweisenden zusätzlichen Verstärkungslage (9), welche axial außen auf der Karkasse (3) und derart in der Seitenwand (6) angeordnet ist, dass deren radial inneres Ende (10) auf Höhe des Wulstbereichs (5) liegt und mit einer Gummilage (15), welche zwischen der Karkasse (3) und der zusätzlichen Verstärkungslage (9) angeordnet ist,
wobei diese Gummilage sich an ihrem unteren, dem Wulstbereich zugewandten Ende (16) - im Reifenquerschnitt betrachtet - ab einer Höhe B dreieckförmig verjüngt und in einer Spitze (19) endet und wobei auf Höhe B die Dicke der Gummilage (15) größer als die Dicke des axial außen angeordneten Karkasshochschlages (3a) ist, wobei B auf Höhe des oberen Endes des Wulstbereiches (5) liegt und wobei dieses untere Ende (16) der Gummilage axial innen in Bezug auf den Wulstbereich (5) angeordnet ist,
**dadurch gekennzeichnet,**
**dass** diese Gummilage (15) über ihre radiale Erstreckung eine gleiche Dicke aufweist,
**dass** das radial äußere Ende (11) der zusätzlichen Verstärkungslage (9) unterhalb einer Gürtellage (2a, 2b) liegt und dass die zusätzliche Verstärkungslage (9) auf einer Höhe A beginnt, welche zwischen den Höhen E und B liegt, wobei E auf Höhe des unteren Endes des Wulstkernes (7) angeordnet ist.

2. Fahrzeugluftreifen nach Anspruch 1,
**dadurch gekennzeichnet, dass** jeder Wulstbereich (5) nur aus einem Wulstkern (7) besteht, wobei der Wulstkern (7) vorzugsweise ein Hochkantkern ist.

3. Fahrzeugluftreifen nach Anspruch 1,
**dadurch gekennzeichnet, dass** der Wulstbereich (5) aus Wulstkern (7) und Apex (8) besteht.

4. Fahrzeugluftreifen nach einem oder mehreren der vorangehenden Ansprüche,
**dadurch gekennzeichnet, dass** die Gummilage (15) auf der Höhe A eine Dicke von 0 - 2 mm aufweist.

5. Fahrzeugluftreifen nach einem oder mehreren der vorangehenden Ansprüche,
**dadurch gekennzeichnet, dass** die Gummilage (15) auf der Höhe B eine Dicke von 0,5 - 3 mm, vorzugsweise eine Dicke von etwa 0,9 mm aufweist.

6. Fahrzeugluftreifen nach einem oder mehreren der vorangehenden Ansprüche,
**dadurch gekennzeichnet, dass** die Festigkeitsträger der Karkasse (3) einen Winkel zwischen 78° und 90° mit der Reifenumfangsrichtung einschließen.

7. Fahrzeugluftreifen nach einem oder mehreren der vorangehenden Ansprüche,
**dadurch gekennzeichnet, dass** die Karkasse (3) eine C-Lagenkonstruktion oder eine 1+0-Lagenkonstruktion aufweist.

8. Fahrzeugluftreifen nach einem oder mehreren der vorangehenden Ansprüche,
**dadurch gekennzeichnet, dass** die zusätzliche Verstärkungslage (9) 1 - 40 mm, vorzugsweise etwa 25 mm weit unter den Gürtel (2) reicht und dort endet, gemessen parallel zur Gürtelkontur und von der Gürtelkante der breitesten Gürtellage (2a, 2b) zur Gürtelmitte.

9. Fahrzeugluftreifen nach einem oder mehreren der vorangehenden Ansprüche,
**dadurch gekennzeichnet, dass** dieser ein PKW-Niederquerschnittsreifen ist.

## Claims

1. Pneumatic vehicle tyre with belt plies (2a, 2b), with two sidewalls (6), with two bead regions (5) each with at least one bead core (7), with a carcass (3), which runs through the tyre from bead region (5) to bead region (5), wraps around the bead regions (5) from the axial inside to the axial outside and ends as a carcass turn-up at a height D, where D is arranged radially outside with respect to the bead region,
with an additional reinforcing ply (9), which has reinforcing elements and is arranged axially outside on the carcass (3) and in such a way in the sidewall (6) that its radially inner end (10) lies at the height of the bead region (5), and
with a rubber ply (15), which is arranged between the carcass (3) and the additional reinforcing ply (9), wherein - seen in the cross section of the tyre - this rubber ply tapers in a triangular shape from a height B at its lower end (16), towards the bead region, and ends in a tip (19) and wherein at height B the thickness of the rubber ply (15) is greater than the thickness of the carcass turn-up (3a) arranged axially on the outside, where B lies at the height of the upper end of the bead region (5) and wherein this lower end (16) of the rubber ply is arranged axially on the inside with respect to the bead region (5),
**characterized**
**in that** this rubber ply (15) has an equal thickness over its radial extent,
**in that** the radially outer end (11) of the additional reinforcing ply (9) lies under a belt ply (2a, 2b) and
**in that** the additional reinforcing ply (9) begins at a height A, which lies between the heights E and B, where E is arranged at the height of the lower end of the bead core (7).

2. Pneumatic vehicle tyre according to Claim 1,
**characterized in that** each bead region (5) consists only of a bead core (7), wherein the bead core (7) is preferably a high-edge core.

3. Pneumatic vehicle tyre according to Claim 1,
**characterized in that** the bead region (5) consists of the bead core (7) and the apex (8).

4. Pneumatic vehicle tyre according to one or more of the preceding claims,
**characterized in that** the rubber ply (15) has at the height A a thickness of 0-2 mm.

5. Pneumatic vehicle tyre according to one or more of the preceding claims,
**characterized in that** the rubber ply (15) has at the height B a thickness of 0.5-3 mm, preferably a thickness of approximately 0.9 mm.

6. Pneumatic vehicle tyre according to one or more of the preceding claims,
**characterized in that** the reinforcing elements of the carcass (3) form an angle with the circumferential direction of the tyre of between 78° and 90°.

7. Pneumatic vehicle tyre according to one or more of the preceding claims,
**characterized in that** the carcass (3) has a C-ply construction or a 1+0-ply construction.

8. Pneumatic vehicle tyre according to one or more of the preceding claims,
**characterized in that** the additional reinforcing ply (9) reaches 1-40 mm, preferably approximately 25 mm, under the belt (2) and ends there, measured parallel to the belt contour and from the belt edge of the widest belt ply (2a, 2b) to the middle of the belt.

9. Pneumatic vehicle tyre according to one or more of the preceding claims,
**characterized in that** it is a low-section car tyre.

## Revendications

1. Pneumatique de véhicule avec des couches de ceinture (2a, 2b), avec deux parois latérales (6), avec deux régions de talon (5) avec respectivemente au moins une tringle (7), avec une carcasse (3) qui s'étend en travers du pneu d'une région de talon (5) à une autre région de talon (5), entoure les régions de talon (5) axialement de l'intérieur vers l'extérieur et se termine sous forme de revers de carcasse à une hauteur D, D étant disposée radialement à l'extérieur par rapport à la région de talon,
avec une couche de renforcement supplémentaire (9) présentant- des renforcements, qui est disposée axialement à l'extérieur sur la carcasse (3) et dans la paroi latérale (6) de telle sorte que son extrémité radialement interne (10) soit située à la hauteur de la région de talon (5) et
avec une couche en caoutchouc (15) qui est disposée entre la carcasse (3) et la couche de renforcement supplémentaire (9),
cette couche en caoutchouc se rétrécissant sous forme triangulaire au niveau de son extrémité inférieure (16) tournée vers la région de talon, vu dans la direction transversale du pneu, à partir d'une hauteur B et se terminant en une pointe (19), et l'épaisseur de la couche en caoutchouc (15) à la hauteur B étant supérieure à l'épaisseur du revers de carcasse (3a) disposé axialement à l'extérieur, B étant située à la hauteur de l'extrémité supérieure de la région de talon (5) et
cette extrémité inférieure (16) de la couche en caoutchouc étant disposée axialement à l'intérieur par rapport à la région de talon (5),
**caractérisé en ce que**
cette couche en caoutchouc (15) présente une épaisseur uniforme sur son étendue radiale, l'extrémité radialement extérieure (11) de la couche de renforcement supplémentaire (9) est située en dessous d'une couche de ceinture (2a, 2b) et
la couche de renforcement supplémentaire (9) commence à une hauteur A qui est située entre les hauteurs E et B, E étant disposée à la hauteur de l'extrémité inférieure de la tringle (7).

2. Pneumatique de véhicule selon la revendication 1,
**caractérisé en ce que** chaque région de talon (5) se compose seulement d'une tringle (7), la tringle (7) étant de préférence une tringle sur chant.

3. Pneumatique de véhicule selon la revendication 1,
**caractérisé en ce que** la région de talon (5) se compose de la tringle (7) et d'un sommet (8).

4. Pneumatique de véhicule selon l'une quelconque ou plusieurs des revendications précédentes,
**caractérisé en ce que** la couche en caoutchouc (15) présente, à la hauteur A, une épaisseur de 0 - 2 mm.

5. Pneumatique de véhicule selon l'une quelconque ou plusieurs des revendications précédentes,
**caractérisé en ce que** la couche en caoutchouc (15) présente, à la hauteur B, une épaisseur de 0,5 - 3 mm, de préférence une épaisseur d'environ 0,9 mm.

6. Pneumatique de véhicule selon l'une quelconque ou plusieurs des revendications précédentes,
**caractérisé en ce que** les renforcements de la carcasse (3) forment un angle compris entre 78° et 90° avec la direction périphérique du pneu.

7. Pneumatique de véhicule selon l'une quelconque ou plusieurs des revendications précédentes,
**caractérisé en ce que** la carcasse (3) présente une construction de couche en C ou une construction de couche 1+0.

8. Pneumatique de véhicule selon l'une quelconque ou plusieurs des revendications précédentes,
**caractérisé en ce que** la couche de renforcement supplémentaire (9) s'étend à une distance de 1 - 40 mm, de préférence d'environ 25 mm en dessous de la ceinture (2) et se termine à cet endroit, mesuré parallèlement au contour de la ceinture et depuis l'arête de ceinture de la couche de ceinture la plus large (2a, 2b) jusqu'au centre de la ceinture.

9. Pneumatique de véhicule selon l'une quelconque ou plusieurs des revendications précédentes,
**caractérisé en ce que** celui-ci est un pneu taille basse pour véhicules légers.
